# EUROPÄISCHE PATENTSCHRIFT

(11) **EP 1 028 513 B1**
(45) Veröffentlichungstag und Bekanntmachung des Hinweises auf die Patenterteilung: **28.05.2008**
(21) Anmeldenummer: 00102552.7
(22) Anmeldetag: 07.02.2000
(51) Int. Cl.: H02K 1/14, H02K 3/52, H02K 5/128, H02K 5/16

(54) **Polschenkelträger**
Salient poles support
Support de pôles saillantes

(30) Priorität: 12.02.1999 DE 19905948
(43) Veröffentlichungstag der Anmeldung: 16.08.2000
(73) Patentinhaber: WILO AG, 44263 Dortmund (DE)
(72) Erfinder: Kech, Hansjürgen, 58313 Herdecke (DE); Lütkenhaus, Norbert, 59399 Olfen (DE); Schreckenberg, Stephan, 44137 Dortmund (DE); Genster, Albert, 45768 Marl (DE)
(74) Vertreter: COHAUSZ DAWIDOWICZ HANNIG & SOZIEN

(56) Entgegenhaltungen:
- EP-A- 0 064 105
- EP-A- 0 374 612
- EP-A- 0 910 152
- US-A- 4 818 911
- PATENT ABSTRACTS OF JAPAN vol. 1995, no. 06, 31. Juli 1995 (1995-07-31) & JP 07 075270 A (CANON ELECTRON INC), 17. März 1995 (1995-03-17)

## Beschreibung

Die Erfindung betrifft einen Elektromotor zum Betrieb einer Pumpe, mit einem Stator, der von Wicklungen umgebene Polschenkel aufweist, und mit einem Polring, der die Polschenkel umgibt und an dem die Polschenkel lösbar befestigt sind, wobei alle Polschenkel (3) in einem gemeinsamen Isolierkörper (1) gehalten sind, der nach der Montage der Polschenkel (3) im Statorpaket verbleibt. Die Erfindung betrifft gleichfalls ein Verfahren zur Herstellung des Statorpaketes eines derartigen Elektromotors.

Generell sind Elektromotoren bekannt, die einen Polring mit angeformten Polschenkeln aufweisen, wobei der Polring in eine der Anzahl der Polschenkel entsprechende Zahl von Segmenten aufgeteilt sein kann. Da Polring und Polschenkel eine Einheit bilden, müssen derartige aus Polring und Polschenkeln bestehende Statorpakete mit sogenannten Nadelwicklern bewickelt werden. Dabei werden Nadeln von einer Stirnseite des Statorpaketes zwischen die Polschenkel geführt und dabei der Draht um einen Polschenkel gelegt. Diese Art des Wickelns hat den Nachteil, dass die Windungen des Drahtes innerhalb der Wicklung eine große Zahl von Kreuzungspunkten aufweisen, was zu einer entsprechend geminderten Packungsdichte und damit zur Vergrößerung der Wicklungslänge (mittlere Spulenlänge) führt. Gleichzeitig erhöht die entsprechend größere Länge des Wickeldrahtes die Herstellungskosten des Motors, was gerade bei kleinen Motoren besonders ins Gewicht fällt.

Bei größeren Motoren ist es bekannt, die Polschenkel einzeln mit Spulenwicklern zu wickeln und sie im gewickelten Zustand im Inneren des Polringes zu verschrauben. Diese Methode ist aufwendig und teuer, da manuelle Fertigungsschritte notwendig sind. Polschenkel im Polring zu verschrauben ist bei der Fertigung von kleinen Motoren zwischen 100 und 1000 Watt, die in Serie massenweise hergestellt werden, nicht praktikabel.

Die europäische Patentanmeldung EP 0 910 152 A1 beschreibt einen Elektromotor mit einem Statorpaket mit Statorwicklungen, die von Polschenkeln getragen werden, wobei die Polschenkel von einem Polring umgeben sind, in welchem sie mittels Schwalbenschwanz-Verbindungen lösbar befestigt sind. Die Polschenkel sind in einem gemeinsamen Isolierkörper gehalten. Ferner ist ein derartiger Elektromotors auch aus der US-Patentschrift 4,818,911 bekannt. Sie offenbart ebenfalls Polschenkel, die in einem gemeinsamen Isolierkörper gehalten sind, wobei der Isolierkörper aus zwei Halbschalen besteht, die axial zusammengefügt sind. Die aus den Schriften EP 0 910 152 A1 und US 4,818,911 bekannten Elektromotoren eignen sich jedoch nicht zum Betrieb einer Pumpe, da keine Maßnahmen zur Trennung des hydraulischen Teils von dem elektrischen Teil der Pumpe gelehrt werden.

Aufgabe der vorliegenden Erfindung ist es daher, einen Elektromotor zum Betrieb einer Pumpe zu schaffen, dessen Statorpaket sich bei geringer Baugröße und großem Wirkungsgrad einfach und kostengünstig maschinell fertigen lässt. Gleichzeitig ist es Aufgabe der Erfindung ein Verfahren zur Herstellung eines Statorpaketes des erfindungsgemäßen Motors zu schaffen.

Diese Aufgabe wird durch eine elektrische Maschine nach Anspruch 1 und ein Verfahren nach Anspruch 13 gelöst.

Der Kern der Erfindung ist, dass alle Polschenkel von einem gemeinsamen als Polschenkelträger ausgebildeten Isolierkörper gehalten werden, der nach der Montage der Polschenkel im Statorpaket und damit in der elektrischen Maschine insbesondere dem Elektromotor verbleibt und gleichzeitig einen Spalttopf bildet.

Dieser Isolierkörper bietet insofern große Vorteile bei der Fertigung der Motoren, als nunmehr zunächst die einzelnen Polschenkel von Spulenwicklern, insbesondere von speziell für ein lagenweises Wickeln geeigneten Flyerwicklern, bewickelt werden können, bevor das Paket der vom Isolierkörper gehaltenen Polschenkel als Ganzes in den Polring eingesetzt wird. Die Bewickelung durch Flyerwickler ist im Gegensatz zu den bekannten Nadelwicklern besonders vorteilhaft, da sich die Wicklungen lagenweise und ohne Kreuzungen aufbringen lassen, so dass eine kompakte Wicklung mit geringer Auftragung entsteht. Außerdem ist es möglich mit großen Drahtquerschnitten zu wickeln, so dass die Wicklungen für hohe Ströme ausgelegt werden können.

Vorteilhafterweise ist der erfindungsgemäße Isolierkörper als eine den Rotor vollständig umgebende und insbesondere aus Kunststoff gespritzte Hülse ausgebildet, die in ihrer Wandung Ausnehmungen zum Einstecken oder Einschieben der einzelnen Polschenkel aufweist. Durch die Hülse sind, die Polschenkel in der richtigen Lage gehalten, wobei die zu bewickelnden Sockel, die Wicklungsabschnitte, der Polschenkel radial von der Außenfläche des Mantels abstehen. Die Lagerung in dem hülsenförmigen Isolierkörper gewährleistet einerseits einen guten Zugang der Wickelmaschine zu den Wicklungsabschnitten und richtet andererseits die Polschenkel in der richtigen Lage für den späteren Einbau aus. Das Einbringen der Polschenkel in den Isolierkörper ist dabei besonders einfach, wenn dieser aus zwei axial zusammenfügbaren Halbschalen aufgebaut ist. Dann können die Polschenkel in die eine Halbschale eingesetzt werden, bevor die andere Halbschale zur endgültigen Halterung der Polschenkel aufgesetzt wird.

In einer weiteren vorteilhaften Ausführungsform der Isolierkörper sind an dessen dem Rotor abgewandten Außenseite rahmenförmige die Polschenkel umgebende Halterungen vorgesehen. Diese Halterungen sind so konzipiert, dass sie die Wicklungsabschnitte der Polschenkel einfassen und Schablonen bilden, auf die die Statorwicklungen aufwickelbar sind. Vorteilhafterweise ist der Isolierkörper mit den Halterungen einteilig aus Kunststoff gespritzt. Damit ist einerseits die kostengünstige Herstellung der Isolierkörper gewährleistet, während andererseits die mit abgerundeten Ecken und Kanten versehenen Kunststoffbauteile den Wicklungsdrähten einen guten Schutz vor Abrieb der Isolierung bieten.

In einer vorteilhaften Ausführungsform hat der Isolierkörper zusätzliche Funktionen. So können beispielsweise an einer Stirnseite Aufnahmeteile vorgesehen werden, in die Schneid-Klemm-Kontakte zur Kontaktierung der Statorwicklungen einsetzbar sind. Die Aufnahmeteile können dabei angespritzt oder aufsteckbar sein. Die so geschaffenen Steckkontakte gewährleisten eine vollständig automatische Montage aller Komponenten in axialer Richtung. Zudem kann der Isolierkörper weitere Komponenten zur Optimierung der Führung und Kontaktierung der Wicklungsenden aufweisen. Der Isolierkörper kann auch Mittel zur Aufnahme eines Lagers für die Welle aufweisen. In der Form, in der er einen Spalttopf bildet, kann an einer Stirnseite ein Lagerschild und an der anderen Stirnseite eine Aufnahme für ein Gleitlager vorgesehen sein.

Aus der großen Packungsdichte ergibt sich der Vorteil einer kleineren Baugröße der Motoren bei geringeren Fertigungs- und Materialkosten und höherem Wirkungsgrad wegen der geringeren benötigten Drahtlänge. Die erhöhte Packungsdichte reduziert gleichfalls die Gefahr des Entstehens von Geräuschen in der Wicklung. Außerdem wird durch die große Packungsdichte die Menge der eingeschlossenen Luft und damit die Gefahr elektrochemischer Korrosion reduziert. Das geht einher mit einer höheren Isolationsfestigkeit und einer besseren Wärmeabfuhr.

Ein weiterer sehr großer Vorteil ist, dass insbesondere bei Mehrphasensystemen wie Drehstrommaschinen jeweils Paare von gegenüberliegenden Wicklungen mit einem durchgehenden Draht gewickelt werden können, so dass auf eine Kontaktverbindung zwischen den beiden Wicklungen eines Paares verzichtet werden kann. Durch das endlose Bewickeln eines Spulenpaares werden die Hälfte aller Wicklungsenden vermieden, was zu einer beträchtlichen Vereinfachung in der Produktion und, mit der zusätzlichen Ersparnis der Kontaktelemente, zu einer Reduzierung der Kosten führt. Durch den Einsatz des von Außen an den Isolierkörper herangeführten Flyerwicklers ist jedoch jede beliebige andere Systematik der Bewicklung der radial vom Isolierkörper nach Außen ragenden Wicklungsabschnitte der Polschenkel möglich.

In einer besonders vorteilhaften Ausführungsform werden der Polring und die Polschenkel in der Technik des sogenannten "Stanzpaketierens" hergestellt. Das Stanzen erlaubt es, Polschenkel beliebigen Querschnittes in hoher Präzision herzustellen. Nach dem Zusammenfügen der Bleche zu einem geblechten Bauteil überträgt sich die Genauigkeit der Bleche auf die Kontur des Bauteils. Besonders vorteilhaft an dem Verfahren ist, dass nunmehr geschlossene Polringe mit getrennt zu montierenden Polschenkeln gefertigt werden können. Die geschlossenen Polringe weisen keine den magnetischen Fluss behindernden Spalte auf, so dass Vibrationen ausgeschlossen sind.

Im Falle der Statorpakete können auf diese Art Polringe und Polschenkel gefertigt werden, die mit sehr präzisen Linearführungen ausgestattet sind. Die Toleranzen der Führungen lassen sich dabei so dimensionieren, dass die Polschenkel in den Polring dauerhaft eingepresst werden können, wobei der Luftspalt zwischen dem Polring und dem Fuß eines Polschenkels eine Weite von wenigen Mikrometern aufweist. Dieser Luftspalt ist im Verhältnis zum Luftspalt zwischen dem Rotor und dem Stator zu klein, als dass er den magnetischen Fluss zum Polring beeinträchtigen könnte. Auch wenn die erfindungsgemäßen Statoren in allen elektrischen Maschinen einsetzbar sind, so ist es besonders vorteilhaft, die erfindungsgemäßen Statorpakete bei Lüftermotoren oder bei Spaltrohrmotoren vorzusehen, die insbesondere in Kreiselpumpen für Heiz- oder Kühlsysteme eingesetzt werden.

Auch wenn Linearführungen beliebigen Querschnittes denkbar sind, so ist eine Schwalbenschwanzführung besonders vorteilhaft, weil sie einen formschlüssigen Halt in radialer und in Umfangsrichtung bietet und weit sie sich durch das Verfahren des Stanzpaketierens einfach mit solchen Toleranzen so herstellen lässt, dass sich das Schlittenteil gut auf oder in das Bett der Führung einpressen lässt. Dabei ist diese Art der Führung vergleichsweise unempfindlich gegenüber Fertigungstoleranzen.

In einer vorteilhaften Ausführungsform sind die Polschenkel in den Polring mittels einer axial angeordneten Linearführung, insbesondere einer Schwalbenschwanzführung, einsteckbar, wobei es besonders vorteilhaft ist, die Linearführung so auszubilden, dass die Polschenkel als im Isolierkörper zusammengefasstes Paket in die Führungsnuten einpressbar sind. Da das Einpressen vollständig maschinell geschehen kann, ist eine einfache und kostengünstige Fertigung gewährleistet.

Eine Ausführungsform eines erfindungsgemäßen Statorpaketes ist in den Zeichnungen 1 und 2 dargestellt und wird im folgenden näher beschrieben. Es zeigen
- **Figur 1**: einen für die Aufnahme eines Lagers oder für das Aufsetzen auf einen Spalttopf geeigneten Isolierkörper, welcher nicht Gegenstand der Erfindung ist,
- **Figur 2**: einen als Spalttopf ausgebildeten Isolierkörper und
- **Figur 3**: einen Isolierkörper mit eingesetzten Polschenkeln.

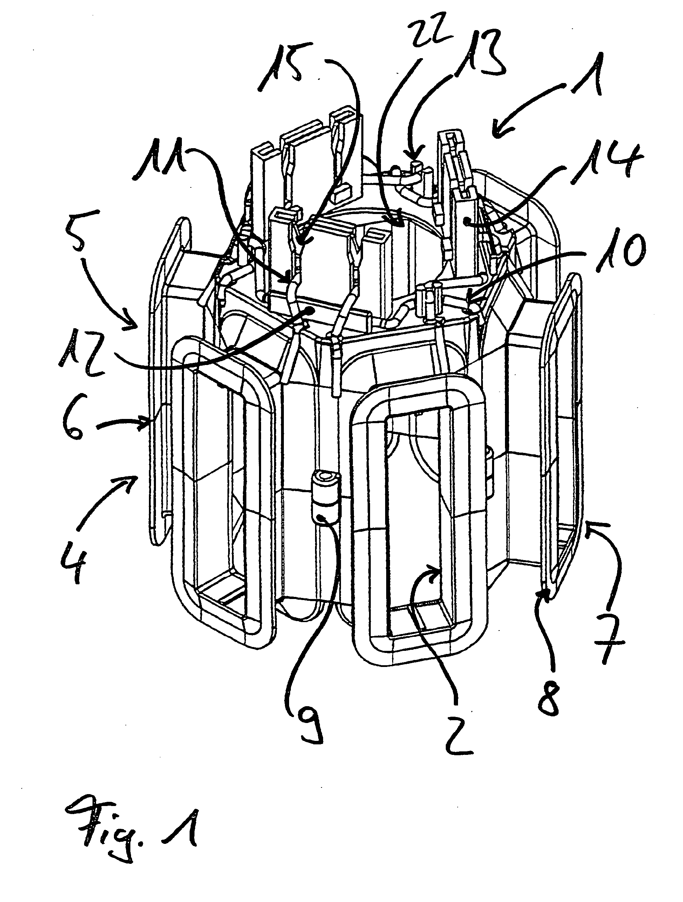

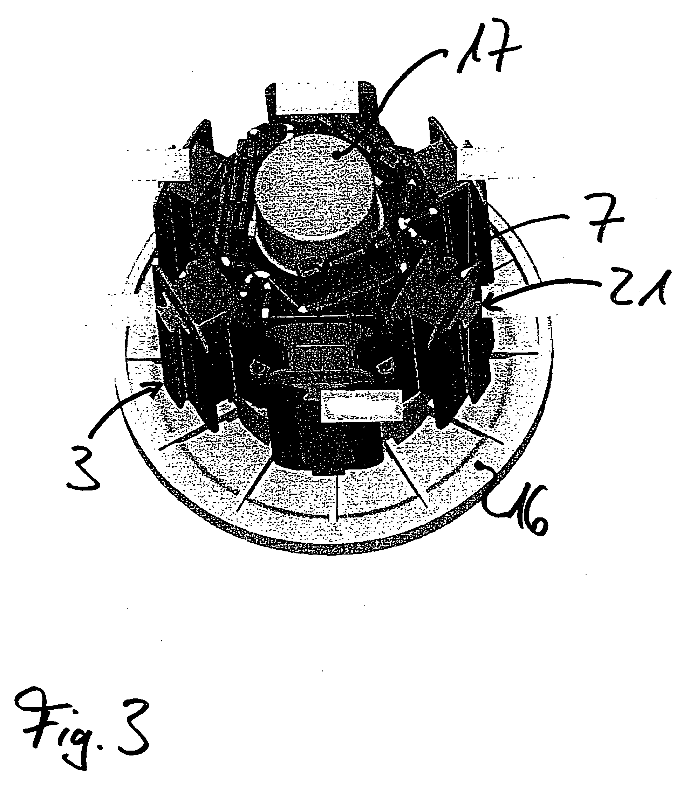

In Figur 1 ist ein aus Kunststoff gespritzter Isolierkörper 1 gezeigt. Der Isolierkörper ist zylindrisch in Form einer den nicht gezeigten Rotor einer elektrischen Maschine umgebenden Hülse gestaltet und weist in seiner Wandung Ausnehmungen 2 für den Einsatz in Figur 3 dargestellter Polschenkel 3 auf. In diesem Ausführungsbeispiel ist der Isolierkörper 1 zweiteilig aus zwei Hälften (Halbschalen) 4 und 5 aufgebaut, die in axialer Richtung an der Stoßstelle 6 zusammengesetzt sind. Am Außenmantel des Isolierkörpers 1 sind rahmenförmige Halterungen 7 angeformt, welche die Ausnehmungen 2 umgeben. Die Halterungen 7 sind mit Kragen 8 versehen, die eine axiale Begrenzung der nicht dargestellten Statorwicklungen, die auf die Halterung aufgewickelt sind, bewirken. Der Querschnitt der Halterungen 7, insbesondere die Winkel der angeformten Kragen 8, ist so konzipiert, dass die Statorwicklungen bei lagenweiser Wicklung unterstützt werden.

In dieser Ausführungsform werden die insbesondere im Stanzpaketierverfahren hergestellten Polschenkel 3 in die Aufnahmen 2 der einen Halbschale 4 eingeschoben bevor die zweite Halbschale 5 aufgesetzt wird. Die beiden Halbschalen sind dabei mit Rastverbindungen 9 aneinander gehalten. Nach dem Einfassen der Polschenkel 3, deren Wicklungsabschnitte von den Halterungen 7 umgeben sind, werden diese von Flyerwicklern bewickelt. In den Figuren sind die Wicklungen nicht dargestellt, sondern lediglich die Wicklungsenden 11 gezeigt. In diesem Beispiel sind je zwei gegenüberliegende der sechs Wicklungen zu einem Wicklungspaar zusammengefasst. Die Bewicklung eines Paares wird dabei derart vorgenommen, dass zunächst eine der Wicklungen angefertigt wird, bevor der Flyerkopf unter Mitnahme des Drahtes über die Stirnseite des Isolierkörpers zur gegenüberliegenden Halterung wechselt und dort die zweite Wicklung aufbringt. Beide Wicklungen sind somit durch den verbindenden Drahtabschnitt 10 zu dem Paar gekoppelt. Der Drahtabschnitt 10 wird auf der Stirnseite des Isolierkörpers 1 in Führungen 12 oder um Zapfen 13 geführt. Der Isolierkörper nach Figur 1 weist in seiner Stirnseite eine Bohrung 22 auf, die zur Aufnahme eines Lagers geeignet ist.

Die verbleibenden sechs Drahtenden 11 werden in Aufnahmen 14 eingebracht, die auf der Stirnseite des Isolierkörpers angeordnet sind und in denen Schneid-Klemm-Kontakte 15 eingesetzt sind. Die Schneid-Klemm-Kontakte 15 dienen einerseits zur Fixierung der Drahtenden 11 und andererseits zur Kontaktierung nach Außen.

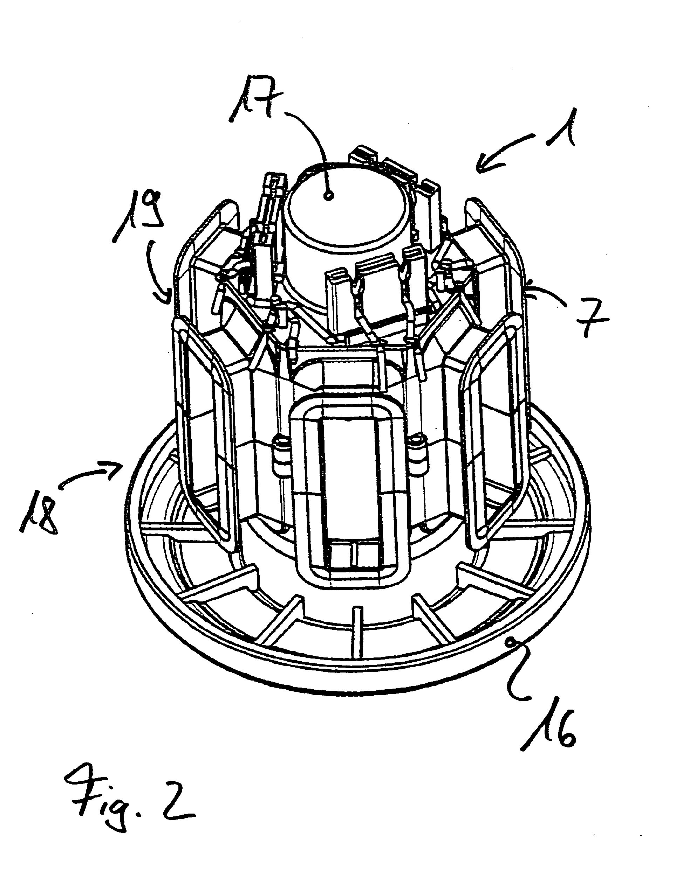

Der in Figur 2 gezeigte Isolierkörper 1 bildet den kompletten Spalttopf eines Spalttopfmotors beispielsweise einer Heizungspumpe, der eine hydraulische Trennung zwischen dem Stator und dem Rotor herstellt. Neben den unter Figur 1 beschriebenen Komponenten weist der Isolierkörper 1 an seiner einen Stirnseite einen angeformten Lagerschild 16 und an seiner anderen Stirnseite eine Aufnahme 17 für ein Gleitlager auf. Auch in diesem Beispiel ist der Isolierkörper 1 zweiteilig. Der eine Teil 18 wird von dem Spalttopf mit angeformtem Lagerschild 16 und Aufnahme 17 gebildet, der andere Teil 19 ist ein Ring, der die verbleibenden Hälften der Rahmen 7 trägt und der auf das Teil 18 aufschiebbar ist. Dabei hält der Ring die am ersten Teil montierten Polschenkel. Beide Teile 18 und 19 sind an dem Stoß 20 zusammengefügt.

In Figur 3 ist der Isolierkörper nach Figur 2 mit eingesetzten Polschenkeln 3 gezeigt. Deutlich zu erkennen sind die den Polen der Polschenkel 3 gegenüberliegenden Fußbereiche, die mit einem Schwalbenschwanz 21 versehen sind. Nach der Bewicklung der Polschenkel 3 wird das in Figur 3 gezeigte Paket in einen nicht dargestellten Polring mit entsprechenden Führungen eingepresst.

Das Verfahren zur Herstellung eines Statorpaketes für eine elektrische Maschine läuft dabei mit folgenden Schritten ab. Zunächst werden die Polschenkel 3 in die Ausnehmungen 2 des Isolierkörpers 1, insbesondere eines Teiles des Isolierkörpers 1 eingesetzt. Dann wird der zweite Teil des Isolierkörpers 1 aufgesetzt und die Polschenkel direkt oder die Halterungen 7 mit Flyerwicklungen umwickelt. Zuletzt wird dieses Paket in den Polring eingepresst.

## Patentansprüche

1. Elektromotor zum Betrieb einer Pumpe, mit einem Statorpaket, das von Statorwicklungen umgebene Polschenkel (3) aufweist, wobei die Polschenkel (3) von einem Polring umgeben sind, an dem die Polschenkel (3) lösbar befestigt sind, wobei alle Polschenkel (3) in einem gemeinsamen Isolierkörper (1) gehalten sind, der nach der Montage der Polschenkel (3) im Statorpaket verbleibt **dadurch gekennzeichnet, dass** der Isolierkörper (1) einen Spalttopf zwischen dem Stator und dem Rotor bildet.

2. Maschine nach Anspruch 1, **dadurch gekennzeichnet, dass** die Polschenkel (3) jeweils über eine axial angeordnete Linearführung (21), insbesondere über eine Schwalbenschwanzführung, mit dem Polring in axialer Richtung kraftschlüssig und in Umfangsrichtung formschlüssig verbindbar sind.

3. Maschine nach Anspruch 1 oder 2, **dadurch gekennzeichnet, dass** der Isolierkörper (1) eine den Rotor vollständig umgebende, insbesondere aus Kunststoff gespritzte, Hülse aufweist.

4. Maschine nach einem der vorherigen Ansprüche, **dadurch gekennzeichnet, dass** der Isolierkörper (1) Ausnehmungen (2) zur Aufnahme der Polschenkel (3) aufweist.

5. Maschine nach einem der vorherigen Ansprüche, **dadurch gekennzeichnet, dass** der Isolierkörper (1) aus zwei axial zusammenfügbaren Halbschalen (4, 5) aufgebaut ist.

6. Maschine nach einem der vorherigen Ansprüche, **dadurch gekennzeichnet, dass** der Isolierkörper (1) an seiner dem Rotor abgewandten Außenseite rahmenförmige, die Polschenkel umgebende Halterungen (7) aufweist, auf welche die Statorwicklungen aufwickelbar sind.

7. Maschine nach Anspruch 6, **dadurch gekennzeichnet, dass** der Isolierkörper (1) und die Halterungen (7) einteilig aus Kunststoff gespritzt sind.

8. Maschine nach einem der vorherigen Ansprüche, **dadurch gekennzeichnet, dass** der Isolierkörper (1) auf einer Stirnseite Aufnahmen (14) aufweist, in die Schneid-Klemm-Kontakte (15) zur Kontaktierung der Statorwicklungen einsetzbar sind.

9. Maschine nach, einem der vorherigen Ansprüche, **dadurch gekennzeichnet, dass** der Isolierkörper (1) einen Lagerträger (22) für den Halt eines Lagers der Welle aufweist.

10. Maschine nach einem der vorherigen Ansprüche, **dadurch gekennzeichnet,**-dass Statorwicklungen zu Wicklungspaaren zusammengefasst sind, wobei ein Wicklungspaar aus einem endlosen Draht gewickelt ist.

11. Maschine nach einem der vorherigen Ansprüche, **dadurch gekennzeichnet, dass** die Statorwicklungen lagenweise gewickelt sind.

12. Maschine nach einem der vorherigen Ansprüche, **dadurch gekennzeichnet,dass** die Polschenkel (3) und der Polring durch Aufeinanderlegen einzelner Bleche im Stanzpaketierverfahren hergestellt sind.

13. Verfahren zur Herstellung eines Statorpaketes für einen Elektromotor nach den Ansprüchen 1 bis 12, **dadurch gekennzeichnet,**
- **dass** die Polschenkel (3) in die Ausnehmungen (2) des Isolierkörpers (1) eingesetzt werden,
- **dass** die Polschenkel (3) oder die Halterungen (7) mit Wicklungen, insbesondere von einem Flyerwickler, umwickelt werden und
- **dass** der die Polschenkel (3) und die Wicklungen tragende Isolierkörper (1) in den Polring haltend eingesetzt wird, wobei der Isolierkörper (1) einen Spalttopf zwischen dem Stator und dem Rotor bildet.

14. Verfahren nach Anspruch 13, **dadurch gekennzeichnet, dass** die Polschenkel (3) in die Linearführungen (21) des Polringes eingepresst werden.

15. Verfahren nach Anspruch 13 oder 14, **dadurch gekennzeichnet, dass** die Enden der Wicklungen (11) zu den stirnseitig vorgesehenen Aufnahmen (14) geführt und mit einem Schneid-Klemm-Kontakt (15) versehen werden.

## Claims

1. Electric motor for operating a pump with a stator package, which has pole arms (3) surrounded by stator windings, in which the pole arms (3) are surrounded by a pole ring, on which the pole arms (3) are fastened in a detachable way, in which all pole arms (3) are held in a joint insulating body (1), which remains in the stator package after assembly of the pole arms (3), **characterised in that** the insulating body (1) forms a containment shell between the stator and the rotor.

2. Machine according to claim 1, **characterised in that** the pole arms (3) may be connected with the pole ring through an axially arranged linear guide (21), particularly through a dovetail guide, in a non-positive way in the axial direction and in a positive way in the circumferential direction.

3. Machine according to claim 1 or 2, **characterised in that** the insulating body (1) has a sleeve, particularly one that is injection moulded out of plastic, which completely surrounds the rotor.

4. Machine according to one of the previous claims, **characterised in that** the insulating body (1) has recesses (2) for taking the pole arms (3).

5. Machine according to one of the previous claims, **characterised in that** the insulating body (1) is made up of two half shells (4, 5), which may be put together axially.

6. Machine according to one of the previous claims, **characterised in that** the insulating body (1) has frame-shaped fastenings (7) on the outside facing away from the rotor, with said fastenings surrounding the pole arms, on which the stator windings may be wound.

7. Machine according to claim 6, **characterised in that** the insulating body (1) and the fastenings (7) are injection moulded in one piece out of plastic.

8. Machine according to one of the previous claims, **characterised in that** the insulating body (1) has pick-ups (14) on a front face, into which the insulation displacement contact (15) may be inserted for contacting the stator windings.

9. Machine according to one of the previous claims, **characterised in that** the insulating body (1) has a bearing carrier (22) for holding a bearing of the shaft.

10. Machine according to one of the previous claims, **characterised in that** the stator windings are put together in winding pairs, in which one winding pair is wound from a continuous wire.

11. Machine according to one of the previous claims, **characterised in that** the stator windings are wound in layers.

12. Machine according to one of the previous claims, **characterised in that** the pole arms (3) and the pole ring are produced by putting individual metal sheets on top of each other in a stamping / stacking process.

13. Method for producing a stator package for an electric motor according to claims 1 to 12, **characterised in that**
- the pole arms (3) are inserted into the recesses (2) of the insulating body (1),
- the pole arms (3) or fastenings (7) are wound with windings, particularly by a flyer winder and
- the pole arms (3) and the insulating body (1) carrying the windings are inserted permanently into the pole ring, in which the insulating body (1) forms a containment shell between the stator and the rotor.

14. Method according to claim 13, **characterised in that** the pole arms (3) are pressed into the linear guides (21) of the pole ring.

15. Method according to claim 13 or 14, **characterised in that** the ends of the windings (11) are guided to the pick-ups (14) provided on the front and provided with a insulation displacement contact (15).

## Revendications

1. Moteur électrique pour l'entraînement d'une pompe, comprenant un paquet de stator qui présente des parties saillantes de pôles (3) entourées par des enroulements de stator, les parties saillantes de pôles (3) étant entourées par une bague polaire, sur laquelle les parties saillantes de pôles (3) sont fixées de façon amovible, toutes les parties saillantes de pôles (3) étant maintenues dans un corps isolant (1) commun, qui reste après le montage des parties saillantes de pôles (3) dans le paquet de stator, **caractérisé en ce que** le corps isolant (1) forme un pot d'entrefer entre le stator et le rotor.

2. Moteur suivant la revendication 1, **caractérisé en ce que** les parties saillantes de pôles (3) peuvent être respectivement assemblées avec la bague polaire, par force d'adhérence dans la direction axiale et par coopération de forme dans la direction périphérique, par l'intermédiaire d'un guidage linéaire (21) disposé dans la direction axiale, en particulier par l'intermédiaire d'un guidage en queue d'aronde.

3. Moteur suivant l'une des revendications 1 et 2,
**caractérisé en ce que** le corps isolant (1) présente une douille entourant totalement le rotor, en particulier injectée en matière plastique.

4. Moteur suivant l'une des revendications précédentes, **caractérisé en ce que** le corps isolant (1) comporte des creux (2) pour loger les parties saillantes de pôles (3).

5. Moteur suivant l'une des revendications précédentes, **caractérisé en ce que** le corps isolant (1) est structuré de deux semi-coques (4, 5) pouvant être assemblées dans la direction axiale.

6. Moteur suivant l'une des revendications précédentes, **caractérisé en ce que** le corps isolant (1) présente sur son côté extérieur, opposé au rotor, des fixations (7) en forme de cadre, entourant les parties saillantes de pôles, sur lesquelles peuvent être enroulés les enroulements de stator.

7. Moteur suivant la revendication 6, **caractérisé en ce que** le corps isolant (1) et les fixations (7) sont injectés d'une seule pièce en matière plastique.

8. Moteur suivant l'une des revendications précédentes, **caractérisé en ce que** le corps isolant (1) présente sur un côté frontal des logements (14), dans lesquels peuvent être mis en place des raccords à borne guillotine (15) pour la mise en contact des enroulements de stator.

9. Moteur suivant l'une des revendications précédentes, **caractérisé en ce que** le corps isolant (1) présente un support de palier (22) pour le maintien d'un palier de l'arbre.

10. Moteur suivant l'une des revendications précédentes, **caractérisé en ce que** des enroulements de stator sont réunis en paires d'enroulements, une paire d'enroulements étant enroulée à partir d'un fil sans fin.

11. Moteur suivant l'une des revendications précédentes, **caractérisé en ce que** les enroulements de stator sont enroulés par couches.

12. Moteur suivant l'une des revendications précédentes, **caractérisé en ce que** les parties saillantes de pôles (3) et la bague polaire sont fabriquées par superposition de tôles individuelles dans le procédé de paquetage - découpage.

13. Procédé de fabrication d'un paquet de stator pour un moteur électrique suivant les revendications 1 à 12, **caractérisé en ce que**
- les parties saillantes de pôles (3) sont mises en place dans les creux (2) du corps isolant (1),
- les parties saillantes de pôles (3) ou les fixations (7) sont guipées d'enroulements, en particulier par un enrouleur à ailettes, et
- le corps isolant (1), supportant les parties saillantes de pôles (3) et les enroulements, est mis en place en maintien dans la bague polaire, le corps isolant (1) formant alors un pot d'entrefer entre le stator et le rotor.

14. Procédé suivant la revendication 13, **caractérisé en ce que** les parties saillantes de pôles (3) sont emmanchées dans les guidages linéaires (21) de la bague polaire.

15. Procédé suivant l'une des revendications 13 et 14, **caractérisé en ce que** les extrémités des enroulements (11) sont guidées en direction des logements (14) prévus du côté frontal et sont munies d'un raccord à borne guillotine (15).
